# EUROPEAN PATENT APPLICATION

(11) **EP 4 586 064 A1**
(43) Date of publication of application: **16.07.2025**
(21) Application number: 24796037.0
(22) Date of filing: 23.04.2024
(51) Int. Cl.: G06F 3/0481

(54) **INFORMATION PRESENTATION METHOD AND APPARATUS, AND ELECTRONIC DEVICE AND STORAGE MEDIUM**

(30) Priority: 27.04.2023 CN 202310475037
(71) Applicant: Beijing Zitiao Network Technology Co., Ltd., Beijing 100190 (CN)
(72) Inventor: SHU, Siqi, Beijing 100028 (CN); SUN, Yiping, Beijing 100028 (CN)
(74) Representative: Williams, Michael David
(86) International application number: PCT/CN2024/089237
(87) International publication number: WO 2024/222656

(57) **Abstract**

Embodiments of the present disclosure provide an information presentation method and apparatus, and electronic device and storage medium. The method comprises: presenting in a preset area of a dialogue interface target dialogue information to be sent; in response to a first trigger operation for the target dialogue information, configuring information content in the target dialogue information in a first presentation size and sending the target dialogue information; and presenting the information content in the target dialogue information in an information presentation area of the dialogue interface in the first presentation size, wherein the first presentation size corresponds to the first trigger operation or the information content of the target dialogue information.

## Description

The present disclosure claims a priority right of the Chinese patent filed on April 27, 2023, entitled as "INFORMATION PRESENTATION METHOD AND APPARATUS, AND ELECTRONIC DEVICE AND STORAGE MEDIUM" and having the application No. 202310475037.9. The full disclosure of this Chinese patent application is combined in the present disclosure by reference.

### FIELD

Embodiments of the present disclosure relate to the field of computer technology, and more specifically, to an information presentation method and apparatus, and electronic device and storage medium.

### BACKGROUND

At present, in some applications, users may set the presentation size of the dialogue information to be sent, to present the respective dialogue information sent in this presentation size at the local terminal and the peer terminal. However, this method for presenting the dialogue information is relatively simple.

### SUMMARY

Embodiments of the present disclosure provide an information presentation method and apparatus, and electronic device and storage medium.

In a first aspect, embodiments of the present disclosure provide a method for presenting information, comprising:
presenting in a preset area of a dialogue interface target dialogue information to be sent;
in response to a first trigger operation for the target dialogue information, configuring information content in the target dialogue information in a first presentation size and sending the target dialogue information;
presenting the information content of the target dialogue information in an information presentation area of the dialogue interface in the first presentation size, wherein the first presentation size corresponds to the first trigger operation or the information content of the target dialogue information.

In a second aspect, embodiments of the present disclosure provide an apparatus for presenting information, comprising:
a first presentation module for presenting in a preset area of a dialogue interface target dialogue information to be sent;
a size configuration module for, in response to a first trigger operation for the target dialogue information, configuring information content in the target dialogue information in a first presentation size and sending the target dialogue information;
a second presentation module for presenting the information content of the target dialogue information in an information presentation area of the dialogue interface in the first presentation size, wherein the first presentation size corresponds to the first trigger operation or the information content of the target dialogue information.

In a third aspect, embodiments of the present disclosure also provide an electronic device, comprising:
one or more processors;
a memory for storing one or more programs;
the one or more programs, when executed by the one or more processors, causing the one or more processors to fulfill the method for presenting information according to the embodiments of the present disclosure.

In a fourth aspect, embodiments of the present disclosure further provide a storage medium storing thereon with computer programs, wherein the computer programs, when executed by a processor, perform the method for presenting information according to the embodiments of the present disclosure.

Embodiments of the present disclosure provide a method, apparatus, an electronic device and a storage medium for presenting information, which comprise: presenting in a preset area of a dialogue interface target dialogue information to be sent; in response to a first trigger operation for the target dialogue information, configuring information content in the target dialogue information in a first presentation size and sending the target dialogue information; presenting the information content of the target dialogue information in an information presentation area of the dialogue interface in the first presentation size, wherein the first presentation size corresponds to the first trigger operation or the information content of the target dialogue information.

### BRIEF DESCRIPTION OF THE DRAWINGS

Through the following detailed description with reference to the accompanying drawings, the above and other objectives, features, and advantages of embodiments of the present disclosure will become more apparent. Throughout the drawings, same or similar reference signs indicate same or similar elements. It should be appreciated that the drawings are schematic and the original components and the elements are not necessarily drawn to scale.
Fig. 1 illustrates a schematic flowchart of a method for presenting information provided by embodiments of the present disclosure;
Fig. 2 illustrates a schematic diagram of a future presentation of the target dialogue information provided by embodiments of the present disclosure;
Fig. 3 illustrates a schematic diagram of the target dialogue information before being sent provided by embodiments of the present disclosure;
Fig. 4 illustrates a further schematic diagram of the target dialogue information before being sent provided by embodiments of the present disclosure;
Fig. 5 illustrates a further schematic diagram of a future presentation of the target dialogue information provided by embodiments of the present disclosure;
Fig. 6 illustrates a schematic diagram of display of a size control provided by embodiments of the present disclosure;
Fig. 7 illustrates a further schematic diagram of display of a size control provided by embodiments of the present disclosure;
Fig. 8 illustrates another schematic diagram of a future presentation of the target dialogue information provided by embodiments of the present disclosure;
Fig. 9 illustrates a schematic flowchart of a further method for presenting information provided by embodiments of the present disclosure;
Fig. 10 illustrates a schematic diagram of display of a dialogue interface provided by embodiments of the present disclosure;
Fig. 11 illustrates a further schematic diagram of display of a dialogue interface provided by embodiments of the present disclosure;
Fig. 12 illustrates a structural diagram of an apparatus for presenting information provided by embodiments of the present disclosure;
Fig. 13 illustrates a structural diagram of an electronic device provided by embodiments of the present disclosure.

### DETAILED DESCRIPTION OF EMBODIMENTS

Embodiments of the present disclosure will be described below in more details with reference to the drawings. Although the drawings illustrate some embodiments of the present disclosure, it should be appreciated that the present disclosure can be implemented in various manners and should not be limited to the embodiments explained herein. On the contrary, the embodiments are provided for a more thorough and complete understanding of the present disclosure. It is to be understood that the drawings and the embodiments of the present disclosure are provided merely for the exemplary purpose, rather than restricting the protection scope of the present disclosure.

It should be appreciated that various steps disclosed in the method implementations of the present disclosure may be executed by different orders, and/or in parallel. Besides, the method implementations may include additional steps and/or omit the illustrated ones. The scope of the present disclosure is not restricted in this regard.

The term "includes" and its variants are to be read as open-ended terms that mean "includes, but is not limited to." The term "based on" is to be read as "based at least in part on." The term "one embodiment" is to be read as "at least one embodiment." The term "a further embodiment" is to be read as "at least one further embodiment." The term "some embodiments" is to be read as "at least some embodiments." Definitions related to other terms will be provided in the following description.

It is noted that the terms "first", "second" and so on mentioned in the present disclosure are provided only to distinguish different apparatuses, modules or units, rather than limiting the sequence of the functions executed by these apparatuses, modules or units or dependency among the apparatuses, modules or units.

It is reminded here that the modifications including "one" and "more" in the present disclosure are schematic and non-restrictive. Those skilled in the art should understand that the above modifications are to be interpreted as "one or more" unless indicated otherwise in the context.

Names of messages or information exchanged between a plurality of apparatuses in the implementations of the present disclosure are provided only for explanatory purposes, rather than being restrictive.

It is to be appreciated that prior to the use of the technical solutions disclosed by various embodiments of the present disclosure, type, usage scope and application scenario of personal information involved in the present disclosure are made known to users through suitable ways in accordance with the relevant laws and regulations, to obtain user authorization.

For example, in response to receiving an active request from the users, a prompt message is sent to the users to clearly inform them that the operation requested to be executed needs to obtain and use their personal information. Accordingly, the users may voluntarily select, in accordance with the prompt message, whether to provide their personal information to software or hardware that performs operations of the technical solution, such as electronic device, application program, server or storage medium.

As an optional and non-restrictive implementation, in response to receiving an active request from the users, a prompt message is sent to the users, wherein the prompt message may be present in the form of pop-up window as an example and the prompt message may be displayed in text in the pop-up window. Besides, the pop-up window also may be provided with a select control through which the users may choose to "agree" or "disagree" the provision of personal information to the electronic device.

It should be appreciated that the above procedure for informing the users and obtaining the user authorization is only exemplary and does not restrict the implementations of the present disclosure. Other methods may also be applied to the implementations of the present disclosure as long as they comply with relevant regulations and laws.

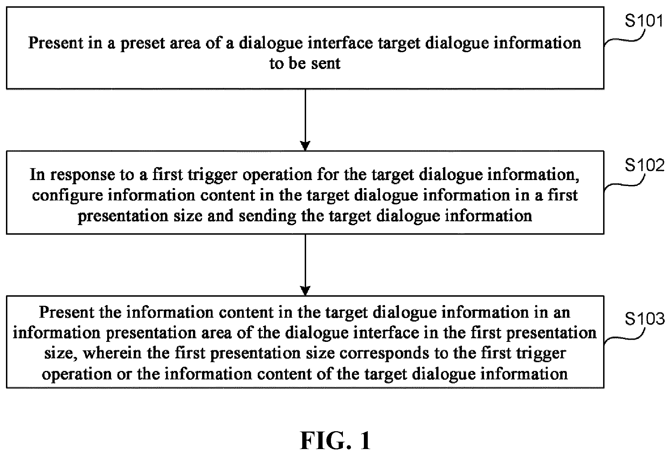

Fig. 1 illustrates a schematic flowchart of a method for presenting information provided by embodiments of the present disclosure. The method may be executed by an apparatus for presenting information, wherein the apparatus may be implemented by software and/or hardware and may be configured in an electronic device. Typically, the apparatus may be configured in a mobile phone or a tablet computer. The method for presenting information provided by embodiments of the present disclosure is adapted to scenarios where a presentation size of dialogue information is configured according to a trigger operation of a user or information content of the dialogue information. As shown in Fig. 1, the method for presenting information provided by this embodiment may include:
S101: presenting in a preset area of a dialogue interface target dialogue information to be sent.

Wherein the target dialogue information may be current dialogue information to be sent, such as dialogue information input by users, or certain dialogue information (such as emoticon picture) selected by users or for users to select etc. The preset area may be understood as a presentation area where the target dialogue information is located before being sent, e.g., an information input area or a presentation area of a candidate information list.

The candidate information list may be a list of candidate information that can be triggered by the users and can be sent in the form of dialogue information, such as a list of candidate dialogue information, an emoticon panel or a list of emoticon pictures associated with a keyword input in the information input area by the users. The presentation area of the candidate information list, for example, may include a presentation area of a candidate reply information list, a presentation area of the emoticon panel and/or an associated region of the information input area. A candidate dialogue information list may be a list of candidate dialogue information that can be selected by the users to quickly send the dialogue information or give a quick reply to the received dialogue information. The users may send certain candidate dialogue information by triggering it in the candidate dialogue information list. Alternatively, the candidate dialogue information may be text information, which may contain characters. The associated region of the information input area, for example, may be a certain region above or below the information input area. As an example, when the target dialogue information is the dialogue information input by the users in the information input area, the preset area may be the information input area; when the target dialogue information is information that could not be input into the information input area (such as candidate dialogue information or emoticon picture), the preset area may be the presentation area of the candidate information list.

Specifically, the target dialogue information to be sent may be presented in the preset area of a dialogue interface. For example, the target dialogue information input by the users may be presented in the information input area of the dialogue interface; and/or at least one candidate information is presented in the preset area. For instance, at least one candidate dialogue information is presented in the candidate dialogue information list, or at least one emoticon picture is presented in the emoticon panel or the associated region of the information input area for users to select, or the candidate dialogue information or the emoticon picture selected by the users is presented.

S102: in response to a first trigger operation for the target dialogue information, configuring the information content in the target dialogue information in a first presentation size and sending the target dialogue information.

Wherein the first trigger operation may be a trigger operation indicative of configuring a presentation size of the information content in the target dialogue information. As an example, the first trigger operation may include an operation of adjusting size of the target dialogue information or an operation of sending the target dialogue information. The first trigger operation may be executed by click, slide or others, i.e., the first trigger operation may be a click operation, a sliding operation or a trigger operation of other types. The above operation for adjusting size may be considered as an operation indicative of adjusting the presentation size of the target dialogue information, such as an operation of adjusting the presentation size of the target dialogue information by executing a preset sliding operation. The above sending operation may be deemed as a trigger operation indicative of sending the target dialogue information, e.g., an operation of clicking a sending control in the dialogue interface after the target dialogue information is input, or a trigger operation of clicking the dialogue interface or a certain emoticon picture displayed in the emoticon panel to send the emoticon picture etc.

The first presentation size may be the presentation size configured for the information content in the target dialogue information in response to the first trigger operation. The presentation size may correspond to the first trigger operation or the information content of the target dialogue information. The first presentation size usually may differ from the default information presentation size of the dialogue information sent by the users in the information presentation area. It is to be understood that if the users set the information content of the target dialogue information in a size same as the default information presentation size through the first trigger operation, the first presentation size at this point may be the same as the second presentation size.

In this embodiment, when the first trigger operation for the target dialogue information is received, the presentation size of the information content in the target dialogue information may be configured in response to the first trigger operation, so as to present the information content in the target dialogue information in the information presentation area in such presentation size.

Specifically, when the first trigger operation for the target dialogue information is received, the first presentation size may be determined in accordance with the first trigger operation or the information content of the target dialogue information; the information content in the target dialogue information is configured in the first presentation size and the target dialogue information is sent.

When the target dialogue information is sent, as an example, the target dialogue information may be sent in response to the first trigger operation. For instance, the target dialogue information is sent after receipt of the first trigger operation, before or after the configuration of the presentation size of the target dialogue information, or during the configuration of the presentation size of the target dialogue information. Besides, the target dialogue information also may be sent upon receipt of the sending operation for the target dialogue information. When the first trigger operation is the sending operation, the target dialogue information is sent in response to the first trigger operation; when the first trigger operation is not the sending operation, upon receipt of the sending operation for the target dialogue information, the target dialogue information is sent in response to the sending operation.

S103: presenting the information content in the target dialogue information in an information presentation area of the dialogue interface in the first presentation size, wherein the first presentation size corresponds to the first trigger operation or the information content of the target dialogue information.

Wherein the information presentation area may be deemed as a region for presenting the dialogue information sent or received by the current users in the dialogue interface.

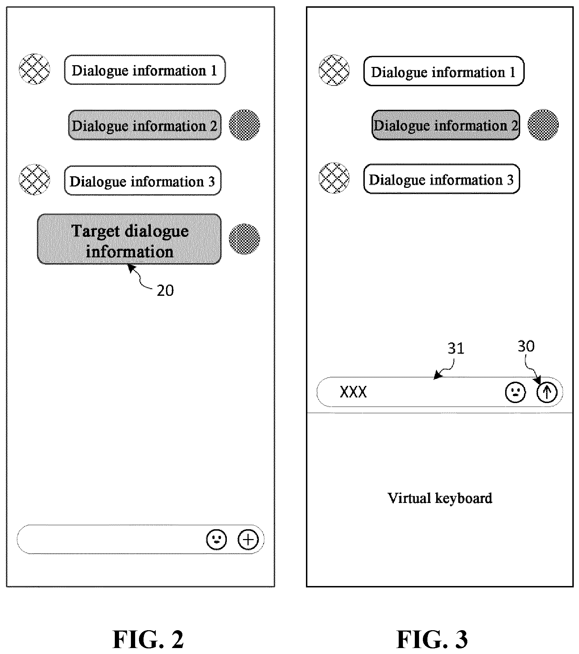

Specifically, when the sending of the target dialogue information is completed, the information content of the target dialogue information 20 may be presented in the information presentation area of the dialogue interface in the first presentation size, as shown in Fig. 2.

In this embodiment, the presentation size of the information content of the target dialogue information may be configured based on the first trigger operation of the user or the information content of the target dialogue information to be sent, such that the users may configure the information content of the target dialogue information in a required presentation size through executing the first trigger operation; or in a case that the first trigger operation or the information content is different, the information content of the sent target dialogue information is presented in a not exactly the same presentation size, to diversify approaches for configuring the presentation size of the dialogue information and presenting the dialogue information.

In some implementations, the first trigger operation may include an operation for adjusting size of the target dialogue information, such as a target sliding operation. The users may adjust the presentation size of the information content of the target dialogue information by sliding along different directions and/or sliding different distances. Alternatively, the first trigger operation includes the target sliding operation, and the first presentation size corresponds to the sliding direction and the sliding distance of the target sliding operation. For example, when it is detected that the user slides along a first direction, the presentation size of the information content of the target dialogue information may be increased; when it is detected that the user slides along a second direction, the presentation size of the information content of the target dialogue information may be decreased; the scaling of the presentation size may be adjusted according to the sliding distance of the user.

Wherein the target sliding operation may be understood as a sliding operation for adjusting the presentation size of the information content of the target dialogue information. The starting point and ending point of the slide, the sliding path and/or the sliding mode (such as single-finger slide or multi-finger slide) may be configured as required.

Alternatively, the target sliding operation includes at least one of: a first sliding operation with a display position of a preset control as a sliding start point, a second sliding operation with a presentation position of the information content of the target dialogue information in the preset area as a sliding start point, and a third sliding operation of dragging a size indicator to move on a size control, wherein a position of the size indicator on the size control indicates a current presentation size of the target dialogue information when being presented in the information presentation area.

Wherein the preset control may be a given control displayed in the dialogue interface. The sliding with the preset control as a sliding start point may indicate adjustment of the presentation size of the information content of the target dialogue information. The preset control may be a sending control or other controls. The following description is provided based on the example that the preset control is a sending control. The size control may be a control for adjusting the presentation size of the information content of the target dialogue information. The size control may be provided with a size indicator. The position of the size indicator on the size control may be associated with the presentation size of the information content of the dialogue information when being presented in the information presentation area. For example, the position of the size indicator on the size control may indicate the current presentation size of the information content of the target dialogue information when it is subsequently presented in the information presentation area. By dragging the size indicator to move on the size control, the users adjust the presentation size of the information content of the target dialogue information in future presentation.

The first sliding operation may be a sliding operation with a display position of the preset control as a sliding start point, e.g., a vertical sliding operation with the display position of the preset control as a sliding start point. The second sliding operation may be a sliding operation with the presentation position of the information content of the target dialogue information in the preset area as a sliding start point, such as a vertical sliding operation with the presentation position of the information content of the target dialogue information in the preset area as a sliding start point. The third sliding operation may be a sliding operation of dragging the size indicator to move on the size control.

As an example, when the preset control is the sending control 30 and the first sliding operation is the vertical sliding operation, the trigger and the response procedure of the first sliding operation may be described as follows: the current application displays in the dialogue interface the sending control 30; for example, when the information input area 31 contains the input content, the current application may display the sending control 30 in the dialogue interface for the users to send their input content. Accordingly, the users may input in the information input area 31 the information content of the target dialogue information they intend to send and may adjust the presentation size of the information content when being presented in the information presentation area through the first sliding operation after the input is completed. The first sliding operation for example may be a vertical sliding operation directly with the sending control as a sliding start point or a vertical sliding after a long-press of the sending control. Besides, the presentation size of the information content in future presentation may be increased by a slide-up and may be decreased by a slide-down. Correspondingly, the current application may determine, in accordance with the sliding operation of the users (i.e., first sliding operation), the first presentation size of the information content in the target dialogue information, send the target dialogue information at the end of the execution of the first sliding operation, and present the information content of the target dialogue information 20 in the information presentation area in the first presentation size as shown in Fig. 2.

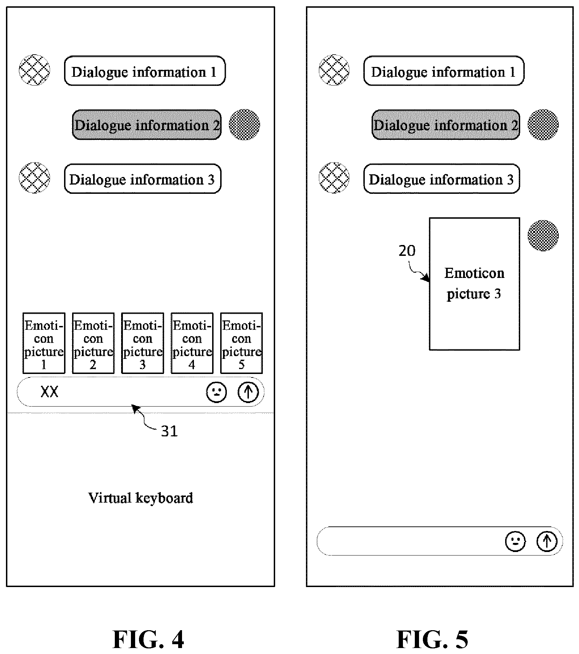

As an example, when the information content of the target dialogue information is the emoticon picture and the preset area is the associated region of the information input area 31, the trigger and the response procedure of the second sliding operation may be described as follows: after the users input characters into the information input area 31, the current application presents the emoticon picture associated with the characters input by the users in the associated region of the information input region 31 (e.g., above the information input area) as shown in Fig. 4. Accordingly, when the users intend to use one emoticon picture as the information content of the target dialogue information and adjust the subsequent presentation size, the second sliding operation, such as a vertical sliding directly using the presentation position of the emoticon picture as a sliding start point or a vertical sliding after a long press on the emoticon picture, may be executed. Besides, the presentation size of the information content in future presentation may be increased by a slide-up and may be decreased by a slide-down. Correspondingly, the current application may determine, in accordance with the sliding operation of the users (i.e., second sliding operation), the first presentation size of the corresponding emoticon picture, send the emoticon picture as the information content of the target dialogue information 20 at the end of the execution of the second sliding operation, and present the information content of the target dialogue information 20 in the information presentation area in the first presentation size as shown in Fig. 5 (e.g., long press the emoticon picture 3 and slide up in Fig. 4 and send the emoticon picture 3 in Fig. 5). Moreover, after the target dialogue information 20 is sent, the display of various emoticon pictures presented in the associated region of the information input area 31 may also be canceled.

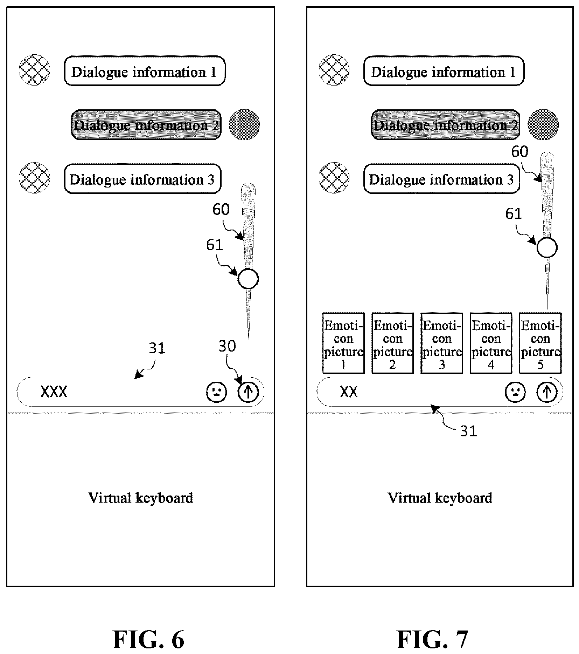

As an example, when the size control 60 supports vertical movement of the size indicator 61, the trigger and the response procedure of the third sliding operation may be described as follows: the current application may present in the dialogue interface the size control 60 and the size indicator 61 disposed on the size control 60 according to Figs. 6 and 7. Accordingly, the users may perform the third sliding operation through dragging the size indicator 61 to move along the size control 60. For example, the size indicator 61 is dragged to move upward along the size control 60, so as to increase the presentation size of the target dialogue information 20 (such as content input to the information input area 31 by the users or candidate information selected by the users) presented in the preset area in future presentation. The size indicator 61 is dragged to move downward along the size control 60, so as to decrease the presentation size of the target dialogue information 20 presented in the preset area in future presentation. Correspondingly, the current application may determine, in accordance with the position of the size indicator 61 in the size control 60, the first presentation size of the target dialogue information 20 presented in the preset area in future presentation, send the target dialogue information 20 after the execution of the third trigger operation is finished or when the sending operation for the target dialogue information 20 is received, and present the information content of the target dialogue information 20 in the information presentation area in the first presentation size as shown in Figs. 2 and 5.

In this embodiment, the current application may maintain presenting the size control in the dialogue interface, and also may present the size control in the dialogue interface only when the preset presentation condition of the size control is met, wherein the preset presentation condition may be configured as required. For example, the preset presentation condition may be configured to be presence of the user-input content in the information input area, and/or receipt of the second trigger operation of the users.

Alternatively, before in response to a first trigger operation for the target dialogue information, configuring the information content in the target dialogue information in a first presentation size and sending the target dialogue information, the method also comprises: in response to a second trigger operation performed in the dialogue interface, presenting a size control in the dialogue interface and presenting a size indicator at a preset position on the size control.

Wherein the second trigger operation may be a trigger operation indicative of displaying the size control, such as a long press operation performed in the preset area, or a long press operation performed on the sending control etc. The long press operation performed in the preset area, for example, may include a long press operation performed on the candidate information list. An operation is considered as the long press operation as long as the press duration reaches a preset duration. The preset position may be flexibly configured. Alternatively, the preset position may adapt to the content presented in the dialogue interface. For example, the size control may be presented in a blank region of the dialogue interface near a boundary of the dialogue interface to avoid blocking the content presented in the dialogue interface.

Specifically, when the second trigger operation is received, e.g., when it is detected that the users long press the sending control or long press certain candidate dialogue information/emoticon picture, the size control 60 may be presented at the preset position of the dialogue interface as shown in Figs. 6 and 7, such that the users may understand or adjust the presentation size of the target dialogue information in the future presentation through the size control 60. As an example, while the size of the target dialogue information 20 is adjusted through the sliding operation for the sending control 30, the size control 60 may be simultaneously presented and position changes of the size indicator 61 on the size control may be presented based on the sliding operation of the sending control 30, to indicate the degree of the current size adjustment.

In this embodiment, the first sliding operation/the second sliding operation and the second trigger operation may be executed continuously or discontinuously. For example, after the execution of the second trigger operation is finished, the user may lift up the finger and then perform the first sliding operation/the second sliding operation; or after the execution of the second trigger operation is finished, the user may directly perform the first sliding operation/the second sliding operation without lifting up the finger. Alternatively, at least one of the first sliding operation and the second sliding operation is performed continuously with the second trigger operation, to enhance continuity of the operations executed by the user for adjusting the presentation size of the target dialogue information in future presentation and lower the operation difficulty for the user in adjusting the presentation size of the dialogue information.

Besides, when the user adjusts the presentation size of the information content in the target dialogue information through the first sliding operation/the second sliding operation and the size control is presented in the dialogue interface, the position of the size indicator in the size control may be adjusted in accordance with the first sliding operation/the second sliding operation during the execution of the first sliding operation/the second sliding operation, such that the position of the size indicator in the size control may indicate the presentation size to which the information content in the target dialogue information is currently adjusted.

In some implementations, the first trigger operation may include the sending operation for the target dialogue information. After the first trigger operation is received, the information content in the target dialogue information may be automatically configured in the first presentation size if the current condition meets the preset condition. In such case, alternatively, the configuring the information content in the target dialogue information in a first presentation size includes: if a current condition meets a preset condition, configuring the information content in the target dialogue information in a first presentation size, wherein the preset condition includes at least one of a first preset condition associated with the number of executions of the first trigger operation in the dialogue interface and a second preset condition associated with the information content of the target dialogue information.

Wherein the preset condition may include the first preset condition associated with the number of the first trigger operation executed by the user in the dialogue interface, and/or the second preset condition associated with the information content of the target dialogue information. The first preset condition and the second preset condition may be flexibly configured. As an example, the first preset condition may be configured as the number of executions of the first trigger operation executed by the user in various dialogue interfaces or the currently presented dialogue interface of the current application being a preset number. For example, the quantity of the dialogue information sent by the user in various dialogue interfaces or this dialogue interface of the current application is a preset quantity; the second preset condition may be configured as the information content of the target dialogue information including a preset keyword or a preset emoticon picture. The preset keyword or the preset emoticon picture may be configured as required. As an example, the preset keyword may be a word that is sent relatively frequently in the current application, such as a word that is sent at a frequency higher than a preset frequency threshold or top n words that are most frequently sent; the preset emoticon picture may be the emoticon picture associated with the preset keyword or the emoticon picture that is sent at a relatively high frequency, where n is a positive integer.

In the above implementations, when the first trigger operation for the target dialogue information is received, e.g., when the sending operation for the target dialogue information is received, it may be judged whether the current condition meets the preset condition; in case that the current condition meets the preset condition, e.g., it is determined that the target dialogue information is an m-th piece of dialogue information sent by the user in the dialogue interface, or it is determined that the information content of the target dialogue information contains the preset keyword or the preset emoticon picture, the information content in the target dialogue information is configured in the first presentation size, the target dialogue information is sent, and the information content of the target dialogue information is presented in the information presentation area of the dialogue interface in the first presentation size as shown in Figs. 2 and 5, where m is a positive integer; the first presentation size may be determined based on the default information presentation size of the information presentation area. For example, the default information presentation size may be increased by a preset size or a preset scale to be the first presentation size.

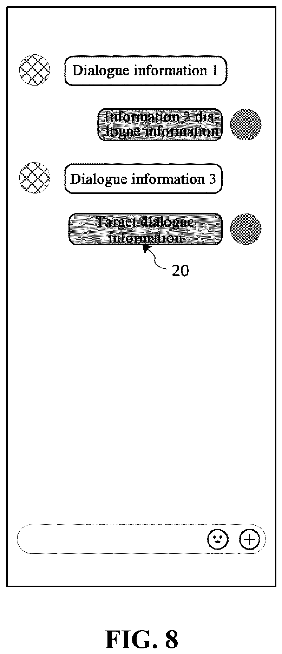

In the above implementations, if a current condition fails to meet a preset condition, the information content in the target dialogue information may be configured in a default second presentation size, the target dialogue information is sent and the information content in the target dialogue information is presented in the information presentation area of the dialogue interface in the second presentation size, as shown in Fig. 8. Alternatively, the method for presenting information provided by this embodiment also may include: if a current condition fails to meet a preset condition, configuring the information content in the target dialogue information in a second presentation size, sending the target dialogue information and presenting the information content in the target dialogue information in an information presentation area of the dialogue interface in the second presentation size, wherein the second presentation size is a default information presentation size of the information presentation area and the second presentation size is different from the first presentation size.

It is to be explained when the preset condition is met, it depends on the user configuration to decide whether to automatically configure the information content of the target dialogue information in the first presentation size. For example, an automatic adjustment switch may be presented to the user in a setting page and the user is reminded that the information content of the sent dialogue information would be configured in the first presentation size when the preset condition is met after the automatic adjustment switch is turned on. After the user turns on the automatic adjustment switch, an operation of configuring the information content of the target dialogue information in the first presentation size when the preset condition is met and configuring the information content of the target dialogue information in the second presentation size when the preset condition is not met is executed.

Besides, before a judgment is made as to whether the current condition meets the preset condition, it may be first determined whether the user has already adjusted the presentation size of the information content of the target dialogue information through the first trigger operation; if yes, the first presentation size for the information content of the target dialogue information is configured in accordance with user adjustment; if no, it is judged whether the current condition meets the preset condition and the presentation size of the information content of the target dialogue information is configured based on the result of judgment.

The method for presenting information provided by this embodiment includes: presenting in a preset area of a dialogue interface target dialogue information to be sent; in response to a first trigger operation for the target dialogue information, configuring information content in the target dialogue information in a first presentation size and sending the target dialogue information; presenting the information content in the target dialogue information in an information presentation area of the dialogue interface in the first presentation size, wherein the first presentation size corresponds to the first trigger operation or the information content of the target dialogue information. With the above technical solution, this embodiment configures the presentation size of the dialogue information when it is subsequently presented in the information presentation area of the sent dialogue information based on the first trigger operation or the information content of the dialogue information, to diversify approaches for configuring the presentation size of the dialogue information and presenting the dialogue information.

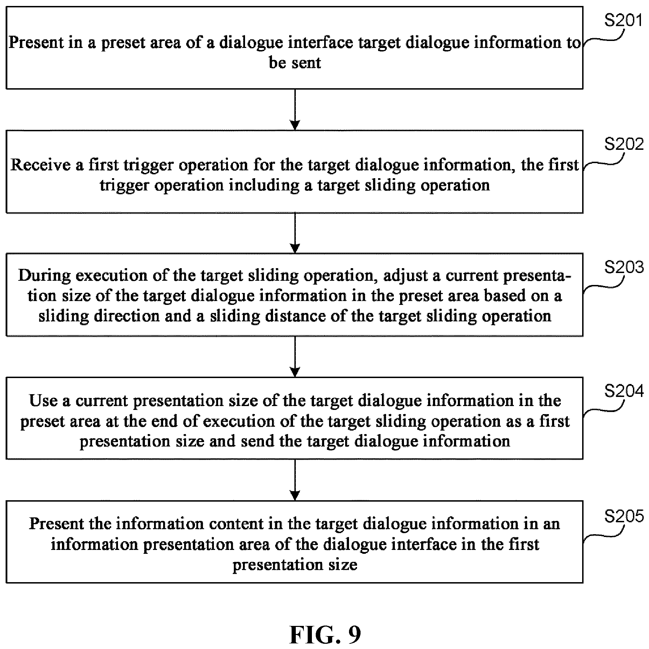

Fig. 9 illustrates a schematic flowchart of a further method for presenting information provided by embodiments of the present disclosure. The solution in this embodiment may be combined with one or more alternative solutions in the above embodiments. Alternatively, the configuring information content in the target dialogue information in a first presentation size includes: during execution of the target sliding operation, adjusting a current presentation size of the target dialogue information in the preset area based on a sliding direction and a sliding distance of the target sliding operation; using a current presentation size of the target dialogue information in the preset area at the end of execution of the target sliding operation as a first presentation size.

Correspondingly, as shown in Fig. 9, the method for presenting information provided by this embodiment may include:
S201: presenting in a preset area of a dialogue interface target dialogue information to be sent.
S202: receiving the first trigger operation for the target dialogue information, the first trigger operation including a target sliding operation.
S203: during execution of the target sliding operation, adjusting a current presentation size of the target dialogue information in the preset area based on a sliding direction and a sliding distance of the target sliding operation.

In this embodiment, when the first trigger operation includes the target sliding operation, the target sliding operation may further indicate adjusting the current presentation size of the target dialogue information in the preset area in addition to adjusting the presentation size of the information content of the target dialogue information when it is subsequently presented in the information presentation area, so as to facilitate the user to preview the presentation size of the information content of the target dialogue information when it is subsequently presented in the information presentation area.

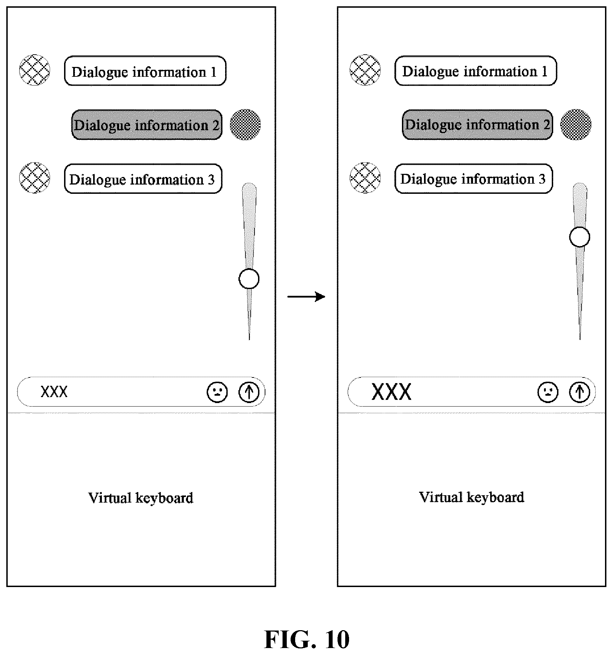

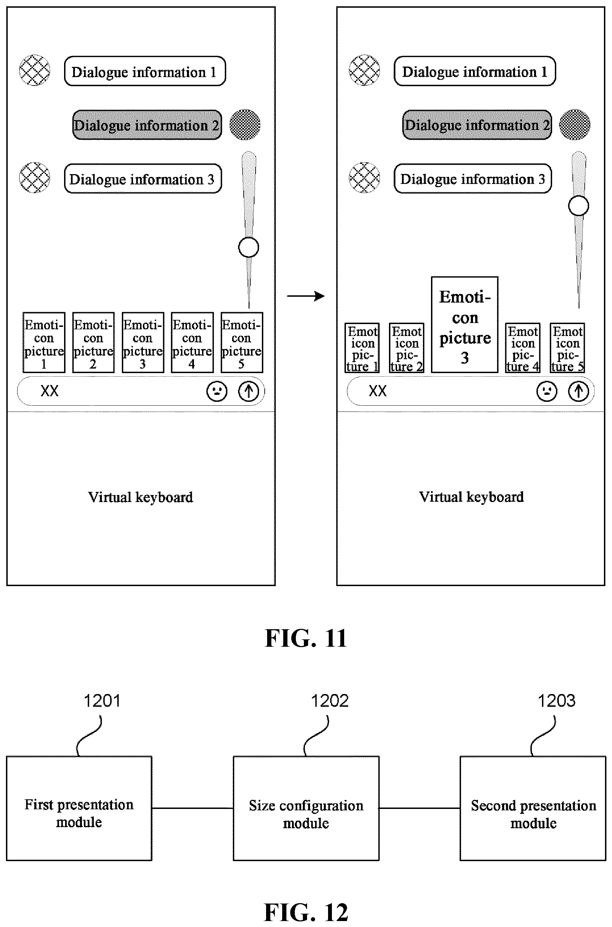

Specifically, when the target sliding operation of the user adjusts the presentation size of the information content of the sent target dialogue information in the information presentation area, during execution of the target sliding operation, a current presentation size of the target dialogue information in the preset area may be adjusted according to a sliding direction and a sliding distance of the target sliding operation. For example, during the execution of the first sliding operation/the third sliding operation, the current presentation size of the information content of the target dialogue information in the information input area is adjusted according to the first sliding operation/the third sliding operation as shown in Fig. 10 (in which the current presentation size of the information content of the target dialogue information in the information input area is increased as an example); during the execution of the second sliding operation, the current presentation size of the information content of the target dialogue information in the preset area is adjusted according to the second sliding operation as shown in Fig. 11 (in which the current presentation size of the emoticon picture 3 in the associated region of the information input area is increased as an example).

In some implementations, when the presentation size of the target dialogue information in the preset area is being adjusted through the target sliding operation, the presentation size of other information (such as other candidate information) apart from the target dialogue information in the preset area may not be adjusted. For instance, only the presentation position of other information in the preset area or the quantity of the candidate information presented in the preset area is adjusted in accordance with the presentation size of the target dialogue information.

In some other implementations, the presentation size of at least part of other information in the preset area apart from the target dialogue information may be adjusted. For example, the presentation size of other information in the preset area may be adjusted in accordance with the presentation size of the target dialogue information. As an example, when the presentation size of the target dialogue information increases, the presentation size of other information in the preset area decreases (as shown in Fig. 11, in which the emoticon picture 3 is the target dialogue information); when the presentation size of the target dialogue information decreases, the presentation size of other information in the preset area increases. Further, the presentation position of other information in the preset area may be further adjusted. In such case, alternatively, the adjusting a current presentation size of the target dialogue information in the preset area based on a sliding direction and a sliding distance of the target sliding operation includes: adjusting a current presentation size of the target dialogue information in the preset area based on a sliding direction and a sliding distance of the target sliding operation, and adjusting a presentation size of at least part of information in the preset area in accordance with a current presentation size of the target dialogue information in the preset region.

In the above implementations, when the target dialogue information is the emoticon picture selected by the user, the presentation size of at least part of other emoticon pictures in the preset area may be adjusted according to the current presentation size of the emoticon picture selected by the user in the preset area. In such case, alternatively, the target dialogue information includes an emoticon picture and the preset area includes an associated area of an information input area or a presentation area of an emoticon panel; and the adjusting a current presentation size of the target dialogue information in the preset area based on a sliding direction and a sliding distance of the target sliding operation, and adjusting a presentation size of at least part of information in the preset area in accordance with a current presentation size of the target dialogue information in the preset region include: adjusting a current presentation size of the emoticon picture selected in the preset area based on a sliding direction and a sliding distance of the target sliding operation and adjusting a presentation size of at least part of other emoticon pictures in the preset area in accordance with a current presentation size of the emoticon picture selected in the preset area, the other emoticon pictures being emoticon pictures in the preset area apart from the emoticon picture selected.

S204: using a current presentation size of the target dialogue information in the preset area at the end of execution of the target sliding operation as a first presentation size and sending the target dialogue information.

In this embodiment, when the execution of the target sliding operation is finished, the presentation size of the information content of the target dialogue information in the preset area at the end of the execution of the target sliding operation may act as the first presentation size and the target dialogue information may be sent, or the target dialogue information is sent upon receipt of the sending operation for it.

S205: presenting the information content of the target dialogue information in an information presentation area of the dialogue interface in the first presentation size.

By adjusting the presentation size of the information content of the target dialogue information in the preset area, the method for presenting information according to this embodiment can preview the presentation size of the information content of the target dialogue information when it is subsequently presented in the information presentation area and facilitate the users to adjust the presentation size of the information content of the target dialogue information in future presentation.

Fig. 12 illustrates a structural diagram of an apparatus for presenting information provided by embodiments of the present disclosure. The apparatus may be implemented by software and/or hardware and may be configured in an electronic device, and typically in mobile phone or tablet computer. The apparatus may configure the presentation size of the dialogue information in accordance with the trigger operation of the user of the information content of the dialogue information through executing the method for presenting information. As shown in Fig. 12, the apparatus for presenting information provided by this embodiment may include: a first presentation module 1201, a size configuration module 1202 and a second presentation module 1203, wherein:
the first presentation module 1201 is provided for presenting in a preset area of a dialogue interface target dialogue information to be sent;
the size configuration module 1202 is provided for, in response to a first trigger operation for the target dialogue information, configuring information content in the target dialogue information in a first presentation size and sending the target dialogue information;
the second presentation module 1203 is provided for presenting the information content in the target dialogue information in an information presentation area of the dialogue interface in the first presentation size, wherein the first presentation size corresponds to the first trigger operation or the information content of the target dialogue information.

The apparatus for presenting information provided by this embodiment presents, by the first presentation module, target dialogue information to be sent in a preset area of a dialogue interface; configures, by the size configuration module, information content in the target dialogue information in a first presentation size in response to a first trigger operation for the target dialogue information and sends the target dialogue information; and presents, by the second presentation module, the information content of the target dialogue information in an information presentation area of the dialogue interface in the first presentation size, wherein the first presentation size corresponds to the first trigger operation or the information content of the target dialogue information. With the above technical solution, this embodiment configures the presentation size of the dialogue information when it is subsequently presented in the information presentation area of the sent dialogue information based on the first trigger operation or the information content of the dialogue information, to diversify approaches for configuring the presentation size of the dialogue information and presenting the dialogue information.

In the above solution, the first trigger operation includes a target sliding operation and the first presentation size may correspond to a sliding direction and a sliding distance of the target sliding operation.

In the above solution, the size configuration module 1202 may include: a size adjustment unit for, during execution of the target sliding operation, adjusting a current presentation size of the target dialogue information in the preset area based on a sliding direction and a sliding distance of the target sliding operation; and a size determination unit for using a current presentation size of the target dialogue information in the preset area at the end of execution of the target sliding operation as a first presentation size.

In the above solution, the size adjustment unit may be provided for: adjusting a current presentation size of the target dialogue information in the preset area based on a sliding direction and a sliding distance of the target sliding operation, and adjusting a presentation size of at least part of information in the preset area in accordance with a current presentation size of the target dialogue information in the preset region.

In the above solution, the target dialogue information includes an emoticon picture and the preset area includes an associated area of an information input area or a presentation area of an emoticon panel; and the size adjustment unit may be provided for: adjusting a current presentation size of the emoticon picture selected in the preset area based on a sliding direction and a sliding distance of the target sliding operation and adjusting a presentation size of at least part of other emoticon pictures in the preset area in accordance with a current presentation size of the emoticon picture selected in the preset area, the other emoticon pictures being emoticon pictures in the preset area apart from the emoticon picture selected.

In the above solution, the target sliding operation includes at least one of the following: a first sliding operation with a display position of a preset control as a sliding start point, a second sliding operation with a presentation position of the information content of the target dialogue information in the preset area as a sliding start point, and a third sliding operation of dragging a size indicator to move on a size control, wherein a position of the size indicator on the size control indicates a current presentation size of the target dialogue information in a case that the target dialogue information is presented in the information presentation area.

Furthermore, the apparatus for presenting information provided by this embodiment also may include: a control presentation module for, before the configuring the information content in the target dialogue information in a first presentation size in response to a first trigger operation for the target dialogue information and the sending the target dialogue, in response to a second trigger operation performed in the dialogue interface, presenting a size control in the dialogue interface and presenting a size indicator at a preset position on the size control.

In the above solution, at least one of the first sliding operation and the second sliding operation is executed continuously with the second trigger operation.

In the above solution, the size configuration module 1202 may be provided for: if a current condition meets a preset condition, configuring the information content in the target dialogue information in a first presentation size, wherein the preset condition includes at least one of a first preset condition associated with the number of executions of the first trigger operation in the dialogue interface and a second preset condition associated with the information content of the target dialogue information.

In the above solution, the size configuration module 1202 may also be provided for: if a current condition fails to meet a preset condition, configuring the information content in the target dialogue information in a second presentation size, sending the target dialogue information and presenting the information content in the target dialogue information in an information presentation area of the dialogue interface in the second presentation size, wherein the second presentation size is a default information presentation size of the information presentation area and the second presentation size is different from the first presentation size.

The apparatus for presenting information provided by the embodiments of the present disclosure may execute the method for presenting information according to any embodiments, contain corresponding functional modules for performing the method for presenting information and achieve the corresponding effects. The technical details not elaborated in the embodiments may refer to the method for presenting information provided by any embodiments of the present disclosure.

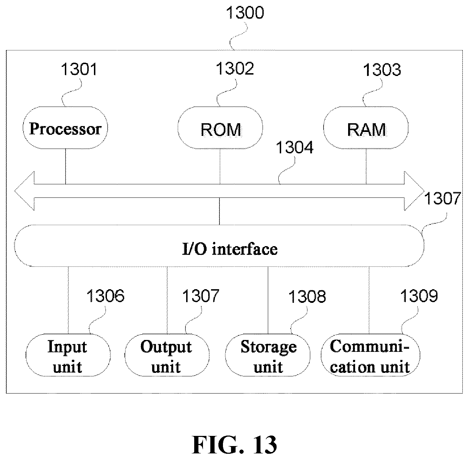

Next, Fig. 13 illustrates a structural diagram of an electronic device (such as terminal device) 1300 adapted to implement embodiments of the present disclosure. In the embodiments of the present disclosure, the terminal device may include mobile terminals, such as mobile phones, notebooks, digital broadcast receivers, Personal Digital Assistants (PDAs), Portable Android Devices (PADs), Portable Multimedia Players (PMPs) and vehicle terminals (such as car navigation terminal) and fixed terminals, e.g., digital TVs and desktop computers etc. The electronic device shown in Fig. 13 is just an example and will not put any restrictions on the functions and application ranges of the embodiments of the present disclosure.

According to Fig. 13, the electronic device 1300 may include a processor (e.g., central processor, graphic processor and the like) 1301, which can execute various suitable actions and processing based on the programs stored in the Read-Only Memory (ROM) 1302 or programs loaded in the Random-Access Memory (RAM) 1303 from a storage unit 1308. The RAM 1303 can also store all kinds of programs and data required by the operations of the electronic device 1300. Processor 1301, ROM 1302 and RAM 1303 are connected to each other via a bus 1304. The input/output (I/O) interface 1305 is also connected to the bus 1304.

Usually, input unit 1306 (including touch screen, touchpad, keyboard, mouse, camera, microphone, accelerometer, gyroscope and like) and output unit 1307 (including liquid crystal display (LCD), speaker and vibrator etc.), storage unit 1308 (including tape and hard disk etc.) and communication unit 1309 may be connected to the I/O interface 1305. The communication unit 1309 may allow the electronic device 1300 to exchange data with other devices through wired or wireless communications. Although Fig. 13 illustrates the electronic device 1300 having various units, it is not a prerequisite to implement or provide all illustrated units. Alternatively, more or less units may be implemented or provided.

In particular, in accordance with embodiments of the present disclosure, the process depicted above with reference to the flowchart may be implemented as computer software programs. For example, the embodiments of the present disclosure include a computer program product including computer programs carried on a computer readable medium, wherein the computer programs include program codes for executing the method demonstrated by the flowchart. In these embodiments, the computer programs may be loaded and installed from networks via the communication unit 1309, or installed from the storage unit 1308, or installed from the ROM 1302. The computer programs, when executed by the processing unit 1301, performs the above functions defined in the method according to the embodiments of the present disclosure.

It is to be explained the above disclosed computer readable medium may be computer readable signal medium or computer readable storage medium or any combinations thereof. The computer readable storage medium for example may include, but not limited to, electric, magnetic, optical, electromagnetic, infrared or semiconductor systems, apparatus or devices or any combinations thereof. Specific examples of the computer readable storage medium may include, but not limited to, electrical connection having one or more wires, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof. In the present disclosure, the computer readable storage medium may be any tangible medium that contains or stores programs. The programs may be utilized by instruction execution systems, apparatuses or devices in combination with the same.

In the present disclosure, the computer readable signal medium may include a data signal propagated in baseband or as part of a carrier wave, carrying computer readable program codes therein. Such propagated data signals may take many forms, including but not limited to, electromagnetic signals, optical signals, or any suitable combinations thereof. The computer readable signal medium may also be any computer readable medium in addition to the computer readable storage medium. The computer readable signal medium may send, propagate, or transmit programs for use by or in connection with instruction execution systems, apparatuses or devices. Program codes contained on the computer readable medium may be transmitted by any suitable media, including but not limited to: electric wires, fiber optic cables and RF (radio frequency) etc., or any suitable combinations thereof.

In some implementations, clients and servers may communicate with each other via any currently known or to be developed network protocols, such as HyperText Transfer Protocol (HTTP) and interconnect with digital data communications in any forms or media (such as communication networks). Examples of the communication networks include Local Area Network (LAN), Wide Area Network (WAN), internet work (e.g., Internet) and end-to-end network (such as ad hoc end-to-end network), and any currently known or to be developed networks.

The above computer readable medium may be included in the aforementioned electronic device or stand-alone without fitting into the electronic device.

The above computer-readable medium carriers one or more programs, where the one or more programs, when executed by the electronic device, cause the electronic device to: present in a preset area of a dialogue interface target dialogue information to be sent; in response to a first trigger operation for the target dialogue information, configure the information content in the target dialogue information in a first presentation size and sending the target dialogue information; present the information content of the target dialogue information in the first presentation size in an information presentation area of the dialogue interface, wherein the first presentation size corresponds to the first trigger operation or the information content of the target dialogue information.

Computer program instructions for executing operations of the present disclosure are written in one or more programming languages or combinations thereof. The above programming languages include, but not limited to, object-oriented programming languages, e.g., Java, Smalltalk, C++ and so on, and traditional procedural programming languages, such as "C" language or similar programming languages. The program codes can be implemented fully on the user computer, partially on the user computer, as an independent software package, partially on the user computer and partially on the remote computer, or completely on the remote computer or server. In the case where remote computer is involved, the remote computer can be connected to the user computer via any type of networks, including local area network (LAN) and wide area network (WAN), or to the external computer (e.g., connected via Internet using the Internet service provider).

The flow chart and block diagram in the drawings illustrate system architecture, functions and operations that may be implemented by system, method and computer program product according to various implementations of the present disclosure. In this regard, each block in the flow chart or block diagram can represent a module, a part of program segment or code, wherein the module and the part of program segment or code include one or more executable instruction for performing stipulated logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and/or flow chart and combinations of the blocks in the block diagram and/or flow chart can be implemented by a hardware-based system exclusive for executing stipulated functions or actions, or by a combination of dedicated hardware and computer instructions.

Units described in the embodiments of the present disclosure may be implemented by software or hardware. In some cases, the name of the module should not be considered as the restriction over the unit per se.

The functionality described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

In the context of the present disclosure, machine readable medium may be tangible medium that may include or store programs for use by or in connection with instruction execution systems, apparatuses or devices. The machine readable medium may be machine readable signal medium or machine readable storage medium. The machine readable storage medium for example may include, but not limited to, electric, magnetic, optical, electromagnetic, infrared or semiconductor systems, apparatus or devices or any combinations thereof. Specific examples of the machine readable storage medium may include, but not limited to, electrical connection having one or more wires, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof.

In accordance with one or more embodiments of the present disclosure, Example 1 provides a method for presenting information, comprising:
presenting in a preset area of a dialogue interface target dialogue information to be sent;
in response to a first trigger operation for the target dialogue information, configuring information content in the target dialogue information in a first presentation size and sending the target dialogue information;
presenting the information content in the target dialogue information in an information presentation area of the dialogue interface in the first presentation size, wherein the first presentation size corresponds to the first trigger operation or the information content of the target dialogue information.

In accordance with one or more embodiments of the present disclosure, in the method of Example 2 according to Example 1, the first trigger operation comprises a target sliding operation and the first presentation size corresponds to a sliding direction and a sliding distance of the target sliding operation.

In accordance with one or more embodiments of the present disclosure, in the method of Example 3 according to Example 2, configuring the information content in the target dialogue information in the first presentation size comprises:
during execution of the target sliding operation, adjusting a current presentation size of the target dialogue information in the preset area based on the sliding direction and the sliding distance of the target sliding operation;
using a current presentation size of the target dialogue information in the preset area at the end of execution of the target sliding operation as the first presentation size.

In accordance with one or more embodiments of the present disclosure, in the method of Example 4 according to Example 3, adjusting the current presentation size of the target dialogue information in the preset area based on the sliding direction and the sliding distance of the target sliding operation comprises:
adjusting the current presentation size of the target dialogue information in the preset area based on the sliding direction and the sliding distance of the target sliding operation, and adjusting a presentation size of at least part of information in the preset area in accordance with the current presentation size of the target dialogue information in the preset region.

In accordance with one or more embodiments of the present disclosure, in the method of Example 5 according to Example 4, the target dialogue information comprises an emoticon picture and the preset area comprises an associated area of an information input area or a presentation area of an emoticon panel; and adjusting the current presentation size of the target dialogue information in the preset area based on the sliding direction and the sliding distance of the target sliding operation, and adjusting the presentation size of at least part of the information in the preset area in accordance with a current presentation size of the target dialogue information in the preset region include:
adjusting a current presentation size of the emoticon picture selected in the preset area based on the sliding direction and the sliding distance of the target sliding operation and adjusting presentation sizes of at least part of other emoticon pictures in the preset area in accordance with the current presentation size of the emoticon picture selected in the preset area, wherein the other emoticon pictures are emoticon pictures in the preset area apart from the emoticon picture selected.

In accordance with one or more embodiments of the present disclosure, in the method of Example 6 according to Example 2, the target sliding operation comprises at least one of: a first sliding operation with a display position of a preset control as a sliding start point, a second sliding operation with a presentation position of the information content of the target dialogue information in the preset area as a sliding start point, and a third sliding operation of dragging a size indicator to move on a size control, wherein a position of the size indicator on the size control indicates a current presentation size of the target dialogue information in a case that the target dialogue information is presented in the information presentation area.

In accordance with one or more embodiments of the present disclosure, before in response to the first trigger operation for the target dialogue information, configuring the information content in the target dialogue information in a first presentation size and sending the target dialogue information, the method of Example 7 according to Example 6 also comprises:
in response to a second trigger operation performed in the dialogue interface, presenting the size control in the dialogue interface and presenting the size indicator at a preset position on the size control.

In accordance with one or more embodiments of the present disclosure, in the method of Example 8 according to Example 7, at least one of the first sliding operation and the second sliding operation is executed continuously with the second trigger operation.

In accordance with one or more embodiments of the present disclosure, in the method of Example 9 according to Example 1, configuring the information content in the target dialogue information in the first presentation size includes:
in response to a current condition meeting a preset condition, configuring the information content in the target dialogue information in the first presentation size, wherein the preset condition includes at least one of a first preset condition associated with a number of executions of the first trigger operation in the dialogue interface and a second preset condition associated with the information content of the target dialogue information.

In accordance with one or more embodiments of the present disclosure, the method of Example 10 according to Example 9 also comprises:
in response to the current condition failing to meet the preset condition, configuring the information content in the target dialogue information in a second presentation size, sending the target dialogue information and presenting the information content in the target dialogue information in the information presentation area of the dialogue interface in the second presentation size, wherein the second presentation size is a default information presentation size of the information presentation area and the second presentation size is different from the first presentation size.

In accordance with one or more embodiments of the present disclosure, Example 11 provides an apparatus for presenting information, comprising:
a first presentation module for presenting in a preset area of a dialogue interface target dialogue information to be sent;
a size configuration module for, in response to a first trigger operation for the target dialogue information, configuring information content in the target dialogue information in a first presentation size and sending the target dialogue information;
a second presentation module for presenting the information content in the target dialogue information in the information presentation area of the dialogue interface in the first presentation size, wherein the first presentation size corresponds to the first trigger operation or the information content of the target dialogue information.

In accordance with one or more embodiments of the present disclosure, Example 12 provides an electronic device, comprising:
one or more processors;
a memory storing one or more programs;
the one or more programs, when executed by the one or more processors, cause the one or more processors to perform the method for presenting information according to any of Examples 1-10.

In accordance with one or more embodiments of the present disclosure, Example 13 provides a computer-readable storage medium stored with computer programs, the programs, when executed by a processor, performing the method for presenting information according to any of Examples 1-10.

The above description only explains the preferred embodiments of the present disclosure and the technical principles applied. Those skilled in the art should understand that the scope of the present disclosure is not limited to the technical solution resulted from particular combinations of the above technical features, and meanwhile should also encompass other technical solutions formed from any combinations of the above technical features or equivalent features without deviating from the above disclosed inventive concept, such as the technical solutions formed by substituting the above features with the technical features disclosed here with similar functions.

Furthermore, although the respective operations are depicted in a particular order, it should be appreciated that the operations are not required to be completed in the particular order or in succession. In some cases, multitasking or multiprocessing is also beneficial. Likewise, although the above discussion comprises some particular implementation details, they should not be interpreted as limitations over the scope of the present disclosure. Some features described separately in the context of the embodiments of the description can also be integrated and implemented in a single embodiment. Conversely, all kinds of features described in the context of a single embodiment can also be separately implemented in multiple embodiments or any suitable sub-combinations.

Although the subject matter is already described by languages specific to structural features and/or method logic acts, it is to be appreciated that the subject matter defined in the attached claims is not limited to the above described particular features or acts. On the contrary, the above described particular features and acts are only example forms for implementing the claims.

## Claims

1. A method for presenting information, comprising:
presenting in a preset area of a dialogue interface target dialogue information to be sent;
in response to a first trigger operation for the target dialogue information, configuring information content in the target dialogue information in a first presentation size and sending the target dialogue information; and
presenting the information content in the target dialogue information in an information presentation area of the dialogue interface in the first presentation size, wherein the first presentation size corresponds to the first trigger operation or the information content of the target dialogue information.

2. The method of claim 1, wherein the first trigger operation comprises a target sliding operation and the first presentation size corresponds to a sliding direction and a sliding distance of the target sliding operation.

3. The method of claim 2, wherein configuring the information content in the target dialogue information in the first presentation size comprises:
during execution of the target sliding operation, adjusting a current presentation size of the target dialogue information in the preset area based on the sliding direction and the sliding distance of the target sliding operation; and
using a current presentation size of the target dialogue information in the preset area at the end of execution of the target sliding operation as the first presentation size.

4. The method of claim 3, wherein adjusting the current presentation size of the target dialogue information in the preset area based on the sliding direction and the sliding distance of the target sliding operation comprises:
adjusting the current presentation size of the target dialogue information in the preset area based on the sliding direction and the sliding distance of the target sliding operation, and adjusting a presentation size of at least part of information in the preset area in accordance with the current presentation size of the target dialogue information in the preset region.

5. The method of claim 4, wherein the target dialogue information comprises an emoticon picture and the preset area comprises an associated area of an information input area or a presentation area of an emoticon panel, and adjusting the current presentation size of the target dialogue information in the preset area based on the sliding direction and the sliding distance of the target sliding operation, and adjusting the presentation size of at least part of the information in the preset area in accordance with the current presentation size of the target dialogue information in the preset region comprise:
adjusting a current presentation size of the emoticon picture selected in the preset area based on the sliding direction and the sliding distance of the target sliding operation and adjusting presentation sizes of at least part of other emoticon pictures in the preset area in accordance with the current presentation size of the emoticon picture selected in the preset area, wherein the other emoticon pictures are emoticon pictures in the preset area apart from the emoticon picture selected.

6. The method of claim 2, wherein the target sliding operation comprises at least one of the following: a first sliding operation with a display position of a preset control as a sliding start point, a second sliding operation with a presentation position of the information content of the target dialogue information in the preset area as a sliding start point, and a third sliding operation of dragging a size indicator to move on a size control, wherein a position of the size indicator on the size control indicates a current presentation size of the target dialogue information in a case that the target dialogue information is presented in the information presentation area.

7. The method of claim 6, wherein before in response to the first trigger operation for the target dialogue information, configuring the information content in the target dialogue information in the first presentation size and sending the target dialogue information, the method further comprises:
in response to a second trigger operation performed in the dialogue interface, presenting the size control in the dialogue interface and presenting the size indicator at a preset position on the size control.

8. The method of claim 7, wherein at least one of the first sliding operation and the second sliding operation is executed continuously with the second trigger operation.

9. The method of claim 6, wherein the preset control comprises a sending control.

10. The method of claim 6, wherein sending the target dialogue information comprises:
determining, in accordance with the first sliding operation, the first presentation size of the information content in the target dialogue information; and
sending the target dialogue information at the end of execution of the first sliding operation.

11. The method of claim 6, further comprising:
presenting in an associated area of an information input area emoticon pictures associated with received characters; and
selecting from the presented emoticon pictures a target emoticon picture as the information content of the target dialogue information.

12. The method of claim 11, wherein configuring the information content in the target dialogue information in the first presentation size and sending the target dialogue information comprise:
determining the first presentation size of the target emoticon picture with a presentation position of the target emoticon picture as a sliding start point; and
in response to an end of an execution of the second sliding operation, sending the target emoticon picture as the information content of the target dialogue information.

13. The method of claim 12, further comprising:
in response to sending the information content of the target dialogue information, canceling display of the emoticon picture presented in the associated area of the information input area.

14. The method of claim 1, wherein configuring the information content in the target dialogue information in the first presentation size comprises:
in response to a current condition meeting a preset condition, configuring the information content in the target dialogue information in the first presentation size, wherein the preset condition includes at least one of a first preset condition associated with a number of executions of the first trigger operation in the dialogue interface and a second preset condition associated with the information content of the target dialogue information.

15. The method of claim 14, further comprising:
in response to the current condition failing to meet the preset condition, configuring the information content in the target dialogue information in a second presentation size, sending the target dialogue information and presenting the information content in the target dialogue information in the information presentation area of the dialogue interface in the second presentation size, wherein the second presentation size is a default information presentation size of the information presentation area and the second presentation size is different from the first presentation size.

16. The method of claim 1, further comprising:
presenting in a setting page an automatic adjustment switch, wherein after the automatic adjustment switch is turned on, the information content of the target dialogue information is configured in a first presentation size in a case that a preset condition is met.

17. The method of claim 1, further comprising:
in response to a user having adjusted a presentation size of the information content of the target dialogue information through the first trigger operation, configuring the information content of the target dialogue information in the first presentation size in accordance with an adjustment of the user.

18. An apparatus for presenting information, comprising:
a first presentation module for presenting in a preset area of a dialogue interface target dialogue information to be sent;
a size configuration module for, in response to a first trigger operation for the target dialogue information, configuring information content in the target dialogue information in a first presentation size and sending the target dialogue information; and
a second presentation module for presenting the information content in the target dialogue information in an information presentation area of the dialogue interface in the first presentation size, wherein the first presentation size corresponds to the first trigger operation or the information content of the target dialogue information.

19. An electronic device, comprising:
at least one processor; and
a memory in communication connection with the at least one processor; wherein,
the memory is stored with computer programs executable by the at least one processor, and the computer programs, when executed by the at least one processor, cause the at least one processor to perform the method for presenting information according to any of claims 1-17.

20. A computer-readable storage medium stored with computer instructions, wherein the computer instructions cause a processor to perform the method for presenting information according to any of claims 1-17.
